# EUROPEAN PATENT SPECIFICATION

(11) **EP 1 761 432 B1**
(45) Date of publication and mention of the grant of the patent: **06.04.2011**
(21) Application number: 05857475.7
(22) Date of filing: 24.06.2005
(51) Int. Cl.: B64D 39/00

(54) **IN-FLIGHT REFUELING SYSTEM, ALIGNMENT SYSTEM, AND METHOD FOR AUTOMATIC ALIGNMENT AND ENGAGEMENT OF AN IN-FLIGHT REFUELING BOOM**
SYSTEM ZUM BETANKEN WÄHREND DES FLUGES, AUSRICHTUNGSSYSTEM UND VERFAHREN FÜR AUTOMATISCHE AUSRICHTUNG UND EINGRIFF EINES AUSLEGERS ZUM BETANKEN WÄHREND DES FLUGES
SYSTEME DE RAVITAILLEMENT EN VOL, SYSTEME D'ALIGNEMENT, ET PROCEDE D'ALIGNEMENT ET DE MISE EN PRISE AUTOMATISES D'UN RAVITAILLEMENT EN VOL

(30) Priority: 28.06.2004 US 880171
(43) Date of publication of application: 14.03.2007
(73) Proprietor: The Boeing Company, Chicago, IL 60606-1596 (US)
(72) Inventor: SCHROEDER, Steven B., Derby, Kansas 67037 (US)
(74) Representative: Lindner, Michael
(86) International application number: PCT/US2005/022450
(87) International publication number: WO 2006/091217

(56) References cited:
- GB-A- 2 237 251
- US-A- 3 285 544
- US-A- 3 917 196
- US-A- 4 025 193
- US-A- 5 499 784
- US-B1- 6 324 295

## Description

### FIELD OF THE INVENTION

The present invention relates generally to in-flight refueling of a manned or unmanned aircraft using a boom in-flight refueling system, and specifically, providing optical and/or electronic alignment devices carried by first and/or second aircraft so as to provide guidance to a refueling boom carried by the first aircraft such that the refueling boom may automatically engage a refueling receptacle carried by the second aircraft as part of an in-flight refueling operation.

### BACKGROUND OF THE INVENTION

In-flight refueling (or air-to-air refueling) is an important method for extending the range of both manned and unmanned aircraft traveling long distances over areas having no feasible landing or refueling points. Although in-flight refueling is a relatively common operation, especially for military aircraft, precise positioning of a second aircraft (the receiver aircraft, for example) with respect to a first aircraft (the tanker aircraft, for example) is required in order to provide a safe engagement of the first aircraft (and a refueling system carried thereby) with the second aircraft for the dispensing of fuel. The requirement of precise relative spatial positioning of two rapidly moving aircraft makes in-flight refueling a challenging operation.

One conventional system for in-flight refueling is the boom in-flight refueling system. The boom in-flight refueling system typically comprises a rigid boom carried by and lowered from a rear portion of a fuselage of a first aircraft. At one end of the boom is an extendable refueling nozzle and adjacent the extendable refueling nozzle are airfoils, which are controlled by an in-flight refueling system operator onboard the first aircraft. The airfoils provide maneuverability of the boom with respect to an aircraft that is to be refueled (the second aircraft) and allow the in-flight refueling operator to position the boom relative to the second aircraft. First, an operator of the second aircraft must maneuver the second aircraft to within an in-flight refueling position, below and aft of the first aircraft. Upon maneuvering into the in-flight refueling position, the in-flight refueling system operator controls the airfoils to position the boom such that the extendable refueling nozzle of the boom may extended into a refueling receptacle on the second aircraft. The in-flight refueling system operator is responsible for maintaining the position of the boom relative to the refueling receptacle as the refueling nozzle is extended towards the second aircraft. As both the first and second aircraft may be traveling at hundreds of miles per hour through areas of turbulence created both by atmospheric conditions and the aerodynamic forces of the control surfaces of the aircraft, the positioning and maintenance of boom position relative to the refueling receptacle may be extremely difficult. Furthermore, if the refueling nozzle is extended (typically at a rate of 1 to 4 feet per second) while the boom and refueling receptacle are out of alignment, the nozzle may impact the second aircraft at a position other than the in-flight refueling receptacle, thereby possibly causing serious damage the second aircraft and/or causing a serious mid-air accident.

Also, the in-flight refueling system operator (operator) may be responsible for performing a number of tasks other than controlling the boom for an in-flight refueling operation. For instance, the operator may also be tasked with monitoring the progress of several simultaneous in-flight refueling operations involving the first aircraft, such as in cases wherein the first aircraft is carrying multiple pod-mounted in-flight refueling systems and may be capable of refueling several other aircraft simultaneously. In addition, the operator may be tasked with monitoring fuel transfer, adjusting and maintaining a balanced fuel load onboard the first aircraft, monitoring the position of the second aircraft relative to the first aircraft during in-flight refueling operations so as to advise an operator of the first aircraft to avoid collisions and/or other safety hazards, and performing other tasks related to various in-flight refueling operations. These tasks may be complicated further when, for instance, the second aircraft is an unmanned aircraft such as a UAV, wherein an operator of the second aircraft may be non-existent and/or located remotely. In the case of UAV refueling, the in-flight refueling system operator must be especially vigilant for in-flight collisions while at the same time be able to maintain the position of the in-flight refueling boom in relative alignment with a refueling receptacle carried by an unmanned aircraft that may not be able to compensate quickly for turbulence and/or other anomalies that may typically complicate the in-flight refueling operation.

Thus, it would be advantageous to reduce the workload and/or number of tasks for the operator such that the operator may focus on safety issues and advising an operator of the first aircraft of the relative positions of the first and second aircraft during in-flight refueling operations. One possible method for reducing operator workload may include increasing the level of automation in the in-flight refueling operation, by, for instance, at least partially automating the positioning controls of the in-flight refueling system, such as, for instance, control of the airfoils used to position the in-flight refueling boom relative to the second aircraft. Some optical systems have been disclosed for positioning refueling drogues (in probe and drogue in-flight refueling systems) with respect to refueling probes attached to a second aircraft. As refueling drogues, however, have proven relatively unmaneuverable, these systems have not been operationally viable. One such optical system is described in U.S. Patent No. 5,326,052 to Krispin et al. Other optical systems for positioning objects with respect to reflectors and retro-reflectors have not been easily adapted for use in all types of in-flight refueling systems. Furthermore, these systems do not address the possibility of automating the control of, for instance, a boom in-flight refueling system. U.S. Patents No. 3,917,196 and No. 4,025,193 to Pond et al. describe an apparatus wherein a modulated light beam is projected from a transmitter aircraft toward a receiver aircraft and reflected back toward the receiver aircraft by a retroreflector mounted on the receiver aircraft. The reflected light beam is received by the transmitter aircraft and is focused onto the face of an image dissector tube. The location of the reflected light beam on the face of the tube defines the position of the receiver aircraft in azimuth and elevation with respect to the position of the transmitter aircraft. The range difference between the two aircraft is determined by phase comparing the transmitted light beam with the received light beam. When used for in-flight refueling, further retroreflectors are mounted on a refueling boom and a similar technique is used to determined the exact location of the boom and its associated refueling nozzle. The resultant information is processed by a digital computer and used to either automatically orient the two aircraft, and the boom and nozzle, or create a display(s) suitable for use by one or both aircraft pilots, and the boom operator, to orient the two aircraft, and the boom and nozzle.

There exists a need for an in-flight refueling system that provides an alignment device to align an in-flight refueling boom carried by a first aircraft with a refueling receptacle carried by a second aircraft. There also exists a need for a boom in-flight refueling system that is at least partially automated so as to reduce operator workload wherein the in-flight refueling system may automatically maneuver and maintain the position of an in-flight refueling boom and/or automatically engage an in-flight refueling boom with a refueling receptacle carried by a second aircraft. There also exists a need for an in-flight refueling system that may be capable of maintaining and/or "tracking" an alignment between an in-flight refueling boom and a refueling receptacle such that an extendable nozzle extending from the in-flight refueling boom may safely engage the refueling receptacle carried by a second aircraft.

### SUMMARY OF THE INVENTION

The embodiments of the present invention defined in claims 1, 2 or 6 satisfy the needs listed above and provide other advantages as described below. The present invention provides an in-flight refueling system, alignment system, and method adapted to facilitate the alignment of an in-flight refueling boom carried by a first aircraft with a refueling receptacle carried by a second aircraft such that an extendable nozzle may extend from the in-flight refueling boom to engage the refueling receptacle in order to conduct an in-flight refueling operation. The in-flight refueling system comprises an in-flight refueling boom adapted to be carried by a first aircraft wherein the in-flight refueling boom further comprises an extendable nozzle capable of extending therefrom. Furthermore, the extendable nozzle is adapted to engage a refueling receptacle carried by a second aircraft. The in-flight refueling system also comprises an alignment device operably engaged with the in-flight refueling boom and configured to determine and indicate alignment of the in-flight refueling boom with the refueling receptacle carried by the second aircraft such that the extendable nozzle can be extended to engage the refueling receptacle and a controller (111) operably engaged with the in-flight refueling boom (114) and in communication with the alignment device (210), the controller configured to position the in-flight refueling boom such that the in-flight refueling boom is in alignment with the refueling receptacle. The in-flight refueling system and alignment system further comprises an imagine device (410) operably engaged with the in-flight refueling boom (114) and configured to be in communication with the controller, the imaging device being further configured to capture an image of the refueling receptacle and provide the image of the refueling receptacle to the controller (111), the controller being further configured to be capable of receiving the image and positioning the in-flight refueling boom in response to the image, so as to align the in-flight refueling boom with the refueling receptacle.

According to other embodiments, the controller may be further configured to automatically extend the extendable nozzle to engage the refueling receptacle while the in-flight refueling boom is in alignment with the refueling receptacle. In other embodiments, the alignment device may further comprise a range-finder device configured to determine the distance between the in-flight refueling boom and the refueling receptacle so as to facilitate the positioning and automatic engagement of the extendable nozzle with respect to the refueling receptacle.

The method of the present invention may also facilitate an in-flight refueling operation between a first aircraft adapted to carry an in-flight refueling boom having an extendable nozzle being capable of extending therefrom and a second aircraft carrying a refueling receptacle. According to one embodiment, the method comprises the steps of: determining that an extendable nozzle configured to extend from the in-flight refueling boom is in alignment with the refueling receptacle; and indicating that the extendable nozzle is in alignment with the refueling receptacle such that the subsequent extension of the extendable nozzle will engage the refueling receptacle. In some method embodiments, the indicating step may further comprise: emitting a signal from the second aircraft; and receiving the signal at the first aircraft, wherein the reception of the signal by the receiver device is indicative of alignment between the in-flight refueling boom and the refueling receptacle. Other method embodiments may further comprise positioning the in-flight refueling boom such that the in-flight refuelling boom is in alignment with the refueling receptacle, and/or extending the extendable nozzle to engage the refueling receptacle while the in-flight refueling boom is in alignment with the refueling receptacle. According to other method embodiments, the method may further comprise capturing an image of the refueling receptacle; positioning of the in-flight refueling boom into alignment with the refueling receptacle at least partially based on the image; determining a distance between the in-flight refueling boom and the refueling receptacle; and extending the extendable nozzle to engage the refueling receptacle based at least partially on the distance between the in-flight refueling boom and the refueling receptacle.

Thus, the various embodiments of the in-flight refueling system, alignment system, and method of the present invention provide many advantages that may include, but are not limited to: the ability to provide a substantially automated alignment between an in-flight refueling boom carried by a first aircraft and a refueling receptacle carried by a second aircraft, the ability to detect and automatically maintain alignment between the in-flight refueling boom and the refueling receptacle, and the ability to automatically extend an extendable nozzle from the in-flight refueling boom to the refueling receptacle so as to initiate an in-flight refueling operation. These features may allow an operator of the in-flight refueling system to focus attention on safety and fuel management issues in relation to the in-flight refueling operation as the operator need only monitor the automated operation of the in-flight refueling system. The embodiments of the present invention may also be especially advantageous when used in in-flight refueling operations involving unmanned aircraft (UAV) since the in-flight refueling boom may be precisely controlled via the in-flight refueling system and alignment systems of the present invention. Thus, the in-flight refueling boom may be positioned to compensate for shifts in the spatial position of the UAV that may often occur because the UAV's operator is located remotely and thus may be unaware of slight changes in position relative to the first aircraft that may hamper the in-flight refueling operation.

These advantages and others that will be evident to those skilled in the art are provided in the in-flight refueling system, alignment system, and method of the present invention.

### BRIEF DESCRIPTION OF THE DRAWINGS

Having thus described the invention in general terms, reference will now be made to the accompanying drawings, which are not necessarily drawn to scale, and wherein:
**FIG. 1** shows a side view of an in-flight refueling operation between a first aircraft carrying a boom in-flight refueling system and a second aircraft carrying a refueling receptacle;
**FIG. 2** shows a cross sectional view of an end of a refueling boom including an alignment device according to one embodiment of the present invention, the cross sectional view corresponding to section A-A of FIG. 1;
**FIG. 3** shows a cross sectional view of a refueling receptacle including a locator device according to one embodiment of the present invention, the cross sectional view corresponding to section **B-B** of FIG. **1****;**
**FIG. 4** shows a cross sectional view of an end of a refueling boom including an alignment device, an imaging device and a range finder device according to one embodiment of the present invention, the cross sectional view corresponding to section A-A of FIG. 1; and
**FIG. 5** shows an image of a refueling receptacle carried by a second aircraft as viewed by an imaging device disposed on an end of an in-flight refueling boom according to one embodiment of the present invention, wherein the image may provide positioning vectors so as to position the in-flight refueling boom into substantial alignment with the refueling receptacle.

### DETAILED DESCRIPTION OF THE INVENTION

The present inventions now will be described more fully hereinafter with reference to the accompanying drawings, in which some, but not all embodiments of the invention are shown. Indeed, these inventions may be embodied in many different forms and should not be construed as limited to the embodiments set forth herein; rather, these embodiments are provided so that this disclosure will satisfy applicable legal requirements. Like numbers refer to like elements throughout.

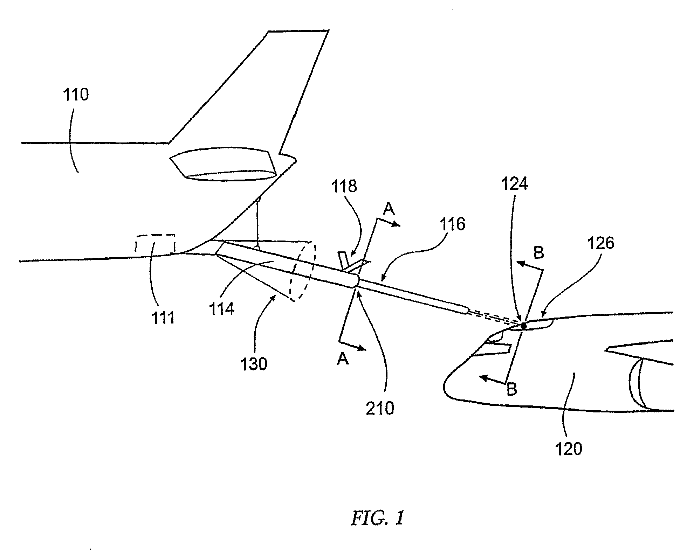

**FIG. 1** shows an in-flight refueling operation between a first aircraft **110** and a second aircraft **120,** wherein the first aircraft may be adapted to carry an in-flight refueling boom **114** as part of an in-flight refueling system, and the in-flight refueling boom **114** may be configured to be guided into alignment with a refueling receptacle **126** carried by the second aircraft **120.** For instance, the refueling boom **114** may be guided into alignment with the refueling receptacle **126** by adjusting the airfoils **118** operably engaged with an end of the boom **114.** According to one embodiment of the present invention, the refueling boom **114** (and airfoils **118** operably engaged therewith) may be controlled by, for instance, a controller **111.** The controller **111** may further comprise one or more microprocessors (or other computer devices) and/or input and output devices such that an operator of the in-flight refueling system may monitor and/or override the operation of the controller **111** if required. The controller **111** may be in communication with the airfoils **111** via various devices and methods suitable for controlling the airfoils, including hydraulic lines, electromechanical devices and/or methods, as well as via electronic connections in communication with one or more electromechanical servo motors operably engaged with the airfoils **118.**

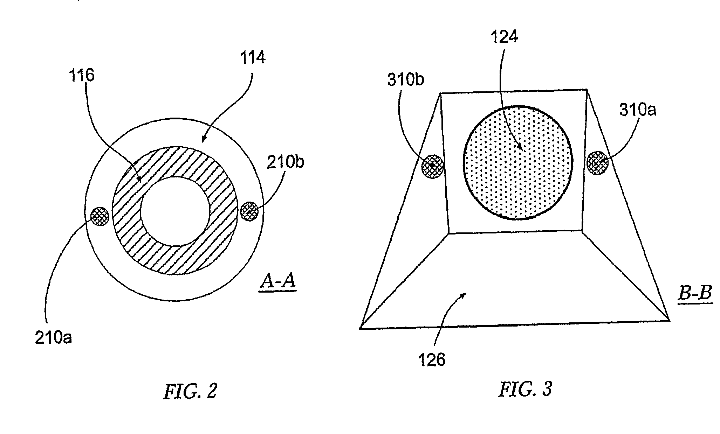

According to one embodiment of the in-flight refueling system and alignment system of the present invention, the controller **111** may lower the in-flight refueling boom **114** to await the rendezvous of the second aircraft **120** with a position substantially aft and below the first aircraft **110.** The controller **111** may, in some instances, be configured to control the airfoils **118** so as to maintain the position of the in-flight refueling boom **114** within a holding circle **130** relative to the first aircraft **110** while awaiting the approach of the second aircraft **120.** An alignment device **210** (as described more fully below), operably engaged with the in-flight refueling boom **114** may be configured to determine and indicate alignment of the in-flight refueling boom **114** with the refueling receptacle **126** operably engaged with the second aircraft such that an extendable nozzle **116** may be extended telescopically from a stowed position within the in-flight refueling boom **114,** to engage the refueling receptacle **126.** As described more fully below, the alignment device **210** may be operably engaged with an end of the in-flight refueling boom **114** (as shown in FIG. 2) and configured to be in communication with the controller **111** such that the alignment device **210** may determine alignment of the in-flight refueling boom **114** with the refueling receptacle **126** and indicate the alignment to the controller **111** such that the controller **111** may extend the extendable nozzle **116** telescopically from the in-flight refueling boom **114** (as shown in FIG. **1**) such that the extendable nozzle **116** may engage the refueling receptacle **126** and thereby transfer fuel through a fuel conduit defined concentrically within the extendable nozzle **116** to a refueling aperture **124** defined in the refueling receptacle **126** carried by the second aircraft **120.**

FIG. **2** shows a cross section (corresponding to section A-A shown on FIG. **1**) of the extendable nozzle **116** and an alignment device **210** disposed on an end of the in-flight refueling boom **114** wherein the alignment device **210** comprises, for instance, a pair of receiver devices **210a, 210b** configured to receive, for instance, a signal (described more particularly below) emitted by a complementary pair of locator devices **310a, 310b** (see FIG. **3**) that may be disposed substantially adjacent to the refueling aperture **124** and generally carried by the refueling receptacle **126** of a second aircraft **120.** The reception of the signal by the receiver devices **210a, 210b** may thus be indicative of alignment between the in-flight refueling boom **114** and the refueling receptacle **126.** According to some embodiments of the present invention, the alignment device **210** (such as, for example, the receiver devices **210a, 210b**) may be configured to be in communication with the controller **111** so as to be responsive to the signal sent by the respective locator devices **310a, 310b** by, for instance, directing the controller **110** to extend the extendable nozzle **116** to engage the refueling receptacle **126.** For instance, upon receiving the signal, the receiver devices **210a, 210b** may communicate with the controller **111** so as to instruct the controller **111** to extend the extendable nozzle **116** into engagement with the refueling receptacle **126.** Further, according to some embodiments, if, during extension of the extendable nozzle **116** the signal is interrupted and/or no longer received by the receiver devices **210a, 210b** prior to engagement with the refueling receptacle **126,** the controller **111** may suspend the extension of the extendable nozzle **116** and/or automatically retract the extendable nozzle **116** in response to the loss of the signal. Thus, according to this embodiment, the in-flight refueling system and alignment system will only complete the extension and engagement of the extendable nozzle if the in-flight refueling boom **114** remains in alignment with the refueling receptacle **126** carried by the second aircraft **120.**

As shown in FIG. **3****,** the locator devices **310a, 310b** may be disposed substantially adjacent to the refueling aperture **124** so as to be configured to emit a signal along an axis of alignment such that if the complementary receiver devices **210a, 210b** are capable of receiving the signal, then the in-flight refueling boom **114** is substantially aligned with the refueling receptacle **126** as shown generally in FIG. **1**. The locator devices **310a, 310b** may comprise, for instance, lasers, infra-red lighting units, visible lighting units, magnetic devices, and/or other devices suitable for emitting a signal that may be capable of being received by complementary receiver devices **210a, 210b** operably engaged with an end of the in-flight refueling boom **114.** According to some embodiments, the locator devices **310a, 310b** may further be disposed remotely from the refueling aperture **124** and in communication, with, for instance, a transmitting device suitable for transmitting the signal therefrom such that the signal may be emitted from a position that is substantially adjacent to refueling aperture **124.** For instance, the locator devices **310a, 310b** may further comprise laser devices configured to emit a laser signal via, for instance, a fiber optic cable to, for instance, one or more lens devices disposed substantially adjacent to the refueling aperture **124** of the second aircraft **120** such that if the complementary receiver devices **210a, 210b** are capable of receiving the signal, then the reception of the signal may be indicative that the in-flight refueling boom **114** is substantially aligned with the refueling receptacle **126** as shown generally in FIG. **1**. Furthermore, the receiver **devices.210a, 210b** may comprise, for instance, optical sensors, transducers, magnetic devices, and/or other devices suitable for receiving a signal along an axis of alignment that may be produced by the locator devices **310a, 310b** either disposed substantially adjacent to the refueling aperture **124** of the second aircraft **120** or configured to emit a signal from a position disposed substantially adjacent to the refueling aperture **124** of the second aircraft **120.** According to other embodiments, the receiver devices **210a, 210b** may be configured to be carried by the tanker aircraft **110** in various positions relative to complementary locator devices **310a, 310b** configured to be carried by a receiver aircraft **120** such that the reception of a signal by the receiver devices **210a, 210b** (from the corresponding locator devices **310a, 310b**) is indicative of substantial alignment between the in-flight refueling boom **114** and the refueling receptacle **126.** For instance, optic devices, mirrors, periscopes, and other devices may be used to indicate such substantial alignment even in some cases wherein the locator devices **310a, 310b** may not be positioned in substantial alignment with receiver devices **210a, 210b** as generally shown in FIG. **1**.

As shown in FIG. **3****,** the refueling receptacle **126** may further comprise a Universal Air Refueling Slipway Installation (UARSI) that may further comprise a recessed refueling aperture **124** surrounded by structurally-reinforced inclined surfaces configured to guide the extendable nozzle **116** into engagement with the refueling aperture **124.** Thus, in some embodiments, the locator devices **310a, 310b** may be further configured to emit a signal adapted to be receivable by the complementary receiver devices **210a, 210b** operably engaged with the in-flight refueling boom **114** so long as the in-flight refueling boom **114** is at least partially aligned with the refueling receptacle **126** (such as a UARSI) such that the extendable nozzle **116,** if extended, would be guided into engagement with the refueling aperture **124** by, for instance, the inclined surfaces of the UARSI. One skilled in the art will appreciate that the refueling receptacle **126** carried by the second aircraft **120** may further comprise a cover device configured to cover the refueling receptacle **126** when not in use such that the refueling aperture **124** may be more fully sealed and such that the refueling receptacle **126** produces a minimum of additional drag and/or aerodynamic disturbances when not in use.

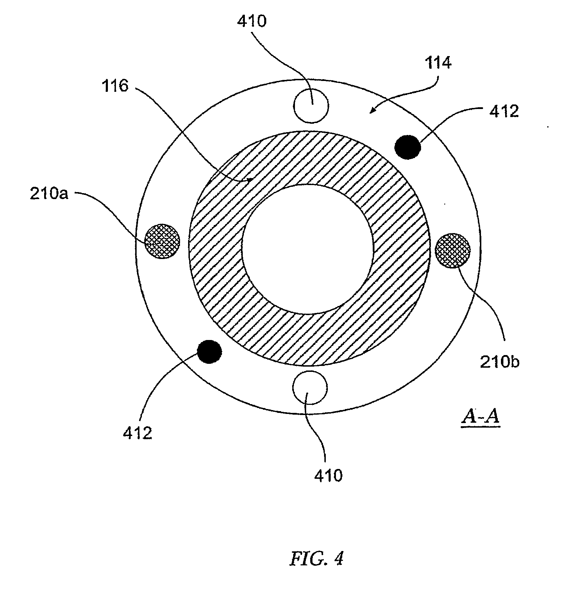

FIG. **4** shows a cross section (as indicated by section A-A shown in FIG. **1**) of the extendable nozzle **116** and an alignment device **210** disposed on the end of the in-flight refueling boom **114** wherein the alignment device **210** comprises, as described above, a pair of receiver devices **210a, 210b** configured to receive, for instance, a signal emitted by a pair of complementary locator devices **310a, 310b** disposed substantially adjacent to a refueling aperture **124** defined in a refueling receptacle **126** carried by a second aircraft **120.** However, the embodiment of the in-flight refueling system and alignment system shown in FIG. 4 further comprises at least one imaging device **410** and at least one range finder device **412** disposed on an end of the in-flight refueling boom **114** wherein both the imaging device **410** and the range finder device may be further configured to communicate with the controller **111** so as to facilitate the automatic alignment and/or engagement of the extendable nozzle **116** with the refueling aperture **124** defined in the refueling receptacle **126** carried by the second aircraft **120.**

The imaging device **410** may comprise, for instance, one or more high-resolution cameras, carried by the in-flight refueling boom **114,** such as by being mounted on an end of the in-flight refueling boom **114,** as shown in FIG. **4****,** configured to capture an image (such as, for instance, a digitized raster image) of the refueling receptacle **126** carried by the second aircraft **120.** According to some embodiments, the imaging device **410** may be further configured to be capable of focusing on a refueling receptacle **126** carried by a second aircraft **120** once the refueling receptacle **126** is within a predetermined distance, such as about 25 feet, of an end of the in-flight refueling boom **114** wherein the imaging device **410,** alignment devices **210a, 210b** and range finder devices **412** may be disposed. As such the imaging device may be capable of capturing an image of the refueling receptacle **126** even as the second aircraft is only approaching the first aircraft, and is not yet close enough to be engaged by the extendable nozzle **116** extending from the in-flight refueling boom **114,** such as according to some embodiments where the maximum extension of the extendable nozzle **116** relative to the in-flight refueling boom **114** is about 19 feet. Additionally, the refueling receptacle **126** carried by the second aircraft **120,** is in some embodiments, positioned in substantial alignment with the in-flight refueling boom **114** and about 6-10 feet from an end of the in-flight refueling boom **114** when the extendable nozzle **116** is extended therefrom in order to engage the refueling aperture **124** defined by the refueling receptacle **126.** In addition, in some embodiments, the imaging device **410** may be further configured to have a field of view of a predetermined angular range, such as about eight degrees (four degrees up and down, and four degrees left and right) with respect to the in-flight refueling boom **114** carried by the tanker aircraft **110.** Thus, in this embodiment, the field of view of the imaging device **410** combined with the range of motion of the in-flight refueling boom **114** within the holding circle **130** defined by the controller **111** (as shown in FIG. **1**) may allow the imaging device **410** to search for and capture an image of the in-flight refueling receptacle **126** (or other unique known structure or device) carried by the second aircraft **120** even if the second aircraft may, in some instances, be approaching the first aircraft **110** (and the in-flight refueling boom **114** carried thereby) along a position that may not be directly aft and below the first aircraft **110.** In order to "search" and/or "track" the refueling receptacle **126,** the controller **111** may further comprise a memory device configured to store digitized images of a standard refueling receptacle as deployed on a number of types of aircraft. Thus, an operator of the system may choose the type of the second aircraft **120** such that the controller **111** may access (from the memory device) a digitized raster image of a reference refueling receptacle **126** and communicate with the imaging device **410** to scan its field of vision for a refueling receptacle **126** having an image similar to the digitized raster image pulled from the memory device. This feature of the controller **111** may further allow the imaging device **410** (in conjunction with the controller **111**) to "track" the refueling receptacle **126** of the second aircraft **120** by, for instance, providing images to the controller **111** that may, in turn, reposition the in-flight refueling boom **114** such that the refueling receptacle **126** remains in view, so as to maintain substantial alignment of the in-flight refueling boom **114,** with respect to the refueling receptacle **126** during the course of an in-flight refueling operation (as described more fully below). The controller **111** and imaging device **412** may be required to search for and/or track the refueling receptacle **126,** for instance, in bad weather or in low-visibility conditions or wherein the second aircraft **120** is an unmanned aircraft (UAV) such that an operator of the second aircraft **120** is not present to make minute control corrections required to approach the first aircraft **110** from a position directly aft and below the first aircraft **110.**

As described above with respect to FIG. **4****,** the in-flight refueling system and alignment system embodiments of the present invention may comprise an imaging device **410** disposed on an end of the in-flight refueling boom **114** so as to be configured to be capable of capturing an image (such as, for instance, a raster image) of the refueling receptacle **126** (such as, for instance, a UARSI) carried by a second aircraft **120.** According to some embodiments, the imaging device **410** may be in communication with a controller **11** such that the imaging device may provide the image of the refueling receptacle **126** to the controller **111.** According to some embodiments, as described above with respect to FIG. **1****,** the controller **111** may, in turn, be further configured to be capable of receiving the image and positioning the in-flight refueling boom **114** in response to the image and/or "track" the refueling receptacle **126** using the in-flight refueling boom **114,** so as to align the in-flight refueling boom **114** with the refueling receptacle **126** (or more particularly, the refueling aperture **124** defined in the refueling receptacle **126**).

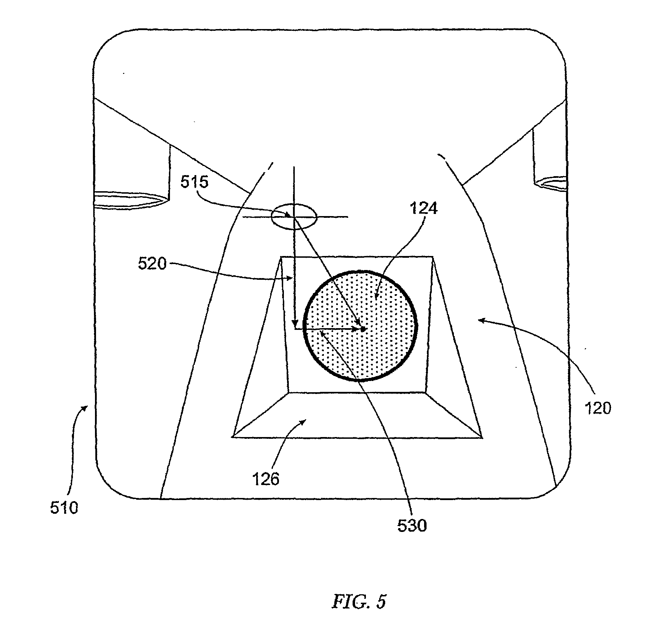

For instance, FIG. **5** shows an image **510** according to one embodiment of the present invention that may be provided by the imaging device **410** of the present invention wherein the imaging device may capture an image **510** of the refueling device **126** carried by a second aircraft **120** as viewed from the imaging device **410** disposed on an end of the in-flight refueling boom **114.** As described above, the image **510** may comprise multiple camera images, if for instance, the imaging device comprises one or more high resolution cameras operably engaged with an end of the in-flight refueling boom. As such, the image **510** provided by the imaging device **410** to the controller **111** may be, for instance, a composite raster image created by digitally combining the images provided by one or more high-resolution cameras to provide, for instance, a raster image, whereby vector coordinates **520, 530** may be produced by the controller **111** (or for instance, a computer program product suitable for producing vector coordinates by analyzing a raster image) such that the controller **111** may position the in-flight refueling boom **114** in response to the vector coordinates **520, 530** determined from the image **510,** so as to align the in-flight refueling boom **114** with the refueling receptacle **126** and the refueling aperture **124** defined therein. For example, in FIG. **5****,** the center point **515** of the image **510** (and therefore, the center point **515** of the field of view of the imaging device **410**) is shown as above and to the left of the refueling receptacle **126** carried by a second aircraft **120** approaching the first aircraft **110.** According to some advantageous embodiments, the imaging device **410** is positioned and operably engaged with an end of the in-flight refueling boom **114** such that the center point **515** of the image **510** provided thereby substantially corresponds with an axis of alignment of the in-flight refueling boom **114** such that if the extendable nozzle **116** were extended telescopically from the in-flight refueling boom **114** an end of the extendable nozzle **116** would pass substantially through the point designated by the center point **515** of the image **510.** In other embodiments, wherein the center point **515** of the image **510** may not substantially correspond with an axis of the in-flight refueling boom **114,** the controller **111** may be further configured to compensate, for instance, for the position of the center point **515** of the image **510** relative to the axis of the in-flight refueling boom **114** so as to produce, for instance, positioning vectors **520,530** suitable for substantially aligning the in-flight refueling boom **114** with a refueling probe **126** carried by a second aircraft **120.** In addition, the controller **111,** using an image **510** provided by, for instance, an imaging device **410,** may be further configured to be capable of positioning the in-flight refueling boom **114** relative to a known fixed point on a given second aircraft **120** shown in the image **510** such that the controller **111** may further be configured to align the in-flight refueling boom **114** with the refueling aperture **124** of the second aircraft **120**

Therefore, the controller **111** may determine a horizontal vector **530** and a vertical vector **520** from the center point **515** of the image **510** to a center point of the refueling receptacle **126.** The controller **111** may be configured, for instance, to determine a center point of the refueling receptacle **126** (or a refueling aperture **124** defined therein, based, for instance, on a catalog of reference digital images of refueling receptacles **126** carried by various aircraft (as described above) that may be stored, for instance, in a memory device operably engaged with the controller **111.** In other embodiments, the controller **111** may be configured to detect a unique known point on the second aircraft **120,** by, for instance, matching a raster image **510** generated by an imaging device **410** to a stored image of a unique known point on the second aircraft **120** (such as for instance the structure of the refueling receptacle **126** (which may, in some instances, be a UARSI)). Thus, the controller **111** may generate and/or call up (from the memory device) positioning vectors **520, 530** from the unique known point to a center point of the refueling aperture **124** defined in a fuselage of the second aircraft **120.** Furthermore, the controller **111** may be configured to position the in-flight refueling boom **114** using the positioning vectors **520, 530** generated by digitizing (*e.g*. rasterizing) an image **510** captured by the imaging device **410** such that the controller **111** may further be capable of positioning the in-flight refueling boom **114** into substantial alignment with the refueling receptacle **126** such that the controller **111** may further (in some cases, automatically) extend the extendable nozzle **116** telescopically from the in-flight refueling boom **114** so as to engage the refueling receptacle **126** carried by the second aircraft.

According to some other embodiments, the controller **111** of the in-flight refueling system and alignment system of the present invention may be further configured to continuously "track" the position of the refueling receptacle **126** carried by the second aircraft **120.** For instance, the controller **111** may communicate with the imaging device **410** so as to produce a series of images that are consistently updated such that new positioning vectors **520, 530** may be constantly generated and utilized by the controller **111** such that the controller **111** may continuously reposition the in-flight refueling boom **114** in substantial alignment with the refueling receptacle **126** carried by a second aircraft. The controller **111,** as stated above, may comprise one or more microprocessors or other computing devices suitable for continuously updating the positioning vectors **520, 530** based on a continuously updated raster image **510** provided by, for instance, the imaging device **410.** Furthermore, the controller **111,** may, in response to the positioning vectors **520, 530** may make continuous adjustments to the position of the in-flight refueling boom **114** relative to the in-flight refueling boom such that the in-flight refueling boom **114** and the refueling receptacle **126** may be substantially in alignment for a period long enough such that the extendable nozzle **116** may extend and engage the refueling aperture **124** defined in the refueling receptacle **126** carried by the second aircraft **120.** For instance, in some in-flight refueling operations, using conventional boom in-flight refueling systems, the extendable nozzle **116** may, in some cases, extend about 10-12 feet telescopically from the in-flight refueling boom **114** at a speed of about 1 to 4 feet per second (as generally shown in FIG.1) in order to contact the refueling receptacle **126** carried by a second aircraft **120.** Thus, if the second aircraft **120** has a zero velocity relative to the first aircraft **110,** the in-flight refueling boom **114** must remain in substantial alignment with the in-flight refueling receptacle **126** carried by the second aircraft **120** for a period of about 3 to 12 seconds in order for the extendable nozzle **116** to extend and engage the refueling receptacle **126** carried by the second aircraft **120.**

Thus, embodiments of the in-flight refueling system and alignment system of the present invention may provide an imaging device **410** in communication with a controller **111** suitably configured to maintain the substantial alignment of the in-flight refueling boom **114** with the refueling receptacle **126** carried by the second aircraft **120.** Furthermore, one skilled in the art will appreciate that embodiments of the present invention may also be suitable for maintaining the substantial alignment of the in-flight refueling boom **114** with the refueling receptacle **126** during the in-flight refueling operation and after the initial engagement of the extendable nozzle **116** with the refueling receptacle **126** carried by the second aircraft. As such, embodiments of the present invention may aid in positioning the in-flight refueling boom **114** during the transfer of fuel such that the in-flight refueling system and alignment system embodiments of the present invention may compensate for small movements of the second aircraft relative to the position of substantial alignment with the in-flight refueling boom **114.** Such small movements may be common in in-flight refueling operations wherein the operator of the second aircraft is inexperienced in refueling via an in-flight refueling operation or wherein the operator of the second aircraft is non-existent and/or positioned remotely such as in cases where the second aircraft **120** is an unmanned aircraft (UAV).

According to some embodiments of the in-flight refueling system and alignment system of the present invention, the imaging device **410** may be operably engaged with an end of the in-flight refueling boom **114** along with an alignment device **210,** comprising, for instance, receiver devices **210a, 210b** configured to receive a signal emitted by complementary locator devices **310a, 310b** disposed substantially adjacent to the refueling aperture **124** so as to be configured to emit a signal along an axis of alignment such that if the complementary receiver devices **210a, 210b** are capable of receiving the signal, then the in-flight refueling boom **114** is substantially aligned with the refueling receptacle **126** as shown generally in FIG. **1****.** Thus, the imaging device **410,** and the receiver devices **210a, 210b** may be configured to communicate with the controller **111** of the present invention so as to both maintain substantial alignment of the in-flight refueling boom **114** with the refueling receptacle **126** carried by the second aircraft **120,** and continuously check the maintenance of alignment via communication with the receiver devices **210a, 210b.** As such, the receiver devices **210a, 210b** and the imaging device **410** may provide complementary signals to the controller **111** such that proper substantial alignment is maintained and redundantly checked and updated during the course of an in-flight refueling operation. Similarly, in some embodiments, the imaging device **410** (which may be operably engaged with an end of the in-flight refueling boom **114**) may be configured to be in communication with the controller **111** so that the controller **111** may, in turn, generate positioning vectors **520, 530** so as to position the in-flight refueling boom into substantial alignment with the refueling receptacle **126** carried by a second aircraft **120.** Further, the receiver devices **210a, 210b** may further be configured to detect a signal emitted from, for instance complementary locator devices **310a, 310b** carried by the second aircraft wherein the detection of the signal may indicate alignment of the in-flight refueling boom **114** with the refueling receptacle **126** and wherein the signal may be communicated to the controller **111** such that the controller **111** may, in response to the signal received by the receiver devices **210a, 210b,** automatically extend the extendable nozzle **116** to engage the refueling receptacle **126** so as to initiate an in-flight refueling operation. Thus, the imaging device **410,** receiver devices **210a, 210b,** and controller **111** may be in communication so as to control the in-flight refueling boom 114 such that the in-flight refueling boom **114** is not only in substantial alignment with the refueling receptacle **126** but also maintained in substantial alignment therewith during the extension of the extendable nozzle **116** for engagement with the refueling receptacle **126** carried by the second aircraft **120.** As such, in some advantageous embodiments, such as shown generally in FIG. **4****,** the components of the in-flight refueling system and alignment system of the embodiments of the present invention may communicate so as to substantially automate both the alignment and extension steps of an in-flight refueling operation.

Also as shown in FIG. **4****,** a range finder device **412** may be provided as a component of the in-flight refueling system and alignment system embodiments of the present invention where the range finder device **412** may comprise one or more range finder devices **412** carried by the tanker aircraft **110,** such as by being disposed on an end of the in-flight refueling boom **114** and configured to be in communication with the controller **111.** The range-finding device **412** may be further configured to determine a distance between an end of the in-flight refueling boom **114** and the refueling receptacle **126** carried by a second aircraft **126** and provide the distance to the controller **111** such that the controller **111** may be further configured to be capable of receiving the distance and extending the extendable nozzle **116** to at least that distance (assuming the measured distance is within a range of extension of the extendable nozzle **116**) in response to the distance, so as to engage the refueling receptacle **126.** In some embodiments, the controller **111** may be configured to calculate the distance between an end of the in-flight refueling boom **114** and the refueling receptacle **126** using, for instance, a digitized raster image **510** of the refueling receptacle **126** provided by an imaging device **410.** However, in some advantageous embodiments, a range finder device **412** may be also provided to supplement the positioning information that may be provided to the controller **111** and/or an operator of the in-flight refueling system as described above in relation to various embodiments of the in-flight refueling system and alignment system of the present invention. The range finder device **412** may further comprise various devices suitable for determining, for instance, a straight-line distance between an end of the in-flight refueling device **114** and the refueling receptacle **126** carried by a second aircraft **120** such that a distance through which the controller **111** must extend the extendable nozzle **116** in order to engage a refueling aperture **124** defined in the refueling receptacle **126,** may be determined. For instance, the range finding device **412** may comprise a laser range finder, a range finder using sound wave reflection, a radar system, a visible light reflection system, and infra-red range finding system, and/or other range finding devices suitable for attachment to an end of the in-flight refueling boom **114** and for determining a distance between the end of the in-flight refueling boom **114** and a refueling receptacle **126** substantially in alignment therewith. The range finding device **412** may also be in communication with the controller **111** so as to provide range information, via, for instance, an output device operably engaged with the controller **111,** to an operator of the in-flight refueling system such that the operator may monitor the range between a second aircraft **120** and the in-flight refueling boom **114** so as to aid in the avoidance of collisions between the in-flight refueling boom **114** and the second aircraft **120**.

Furthermore, according to some embodiments of the in-flight refueling system and alignment system of the present invention, the controller **111** may further comprise and/or be operably engaged with an output device (as described generally above), such as a high-resolution video monitor and/or numerical displays suitable for providing the image **510** of the refueling receptacle **126** relative to the in-flight refueling boom **114** as well as the positioning vectors **520, 530** that may be produced by the controller **111** to position the in-flight refueling boom **114** in substantial alignment with the in-flight refueling device **126** carried by the second aircraft **120.** In addition, the output device may be further configured to provide a distance between the in-flight refueling boom **114** and the refueling receptacle **126,** provided by, for instance, a range finding device **412** that may be included according to some embodiments of the in-flight refueling system and alignment system. Thus, an operator of the in-flight refueling system may monitor the substantially automated in-flight refueling system and alignment system of the present invention to ensure that the systems are working safely and properly to carry out the in-flight refueling operation. Furthermore, as discussed above, the controller **111** may further comprise a manual override control such that the operator may take over control of the positioning of the in-flight refueling boom **114** via the airfoils **118,** the extension of the extendable nozzle **116,** and/or other control parameters related to the in-flight refueling operation. Accordingly, the controller **111** and, in some embodiments, an output device operably engaged therewith, may be positioned within the fuselage of the tanker aircraft near an in-flight refueling system control station where, for instance, an operator of the in-flight refueling system may be stationed. In some cases the in-flight refueling system control station (and controller **111** positioned therein) may be located in a remote aerial refueling operating (RARO) station positioned near the forward end of the fuselage of the tanker aircraft **110.** In other embodiments, the controller **111** may be located in an aft portion of the fuselage of the tanker aircraft **110** (as shown, for instance, in **FIG. 1**).

The embodiments of the in-flight refueling system and alignment system of the present invention may comprise a variety of optical, electronic, computer, transducer, imaging, digitizing, and electromechanical devices such as, for instance, the receiver devices **210a, 210b** that may be included as part of an alignment device **210,** the imaging device **410,** the controller **111,** the range finding device **412,** and electromechanical devices and/or connections configured to carry signals from the controller **111,** and/or a manual override control operably engaged therewith, to the airfoils **118** used to actuate the positioning of the in-flight refueling boom **114** during an in-flight refueling operation. According to various embodiments, as described more fully above, these various devices may be in communication with each other so as to substantially automate the in-flight refueling operation between a first aircraft **110** and a second aircraft **120.** Communication between these devices may occur via a variety of communication devices and methods, such as, for instance via hard wired connections to for instance, printed circuit boards and/or integrated circuits, wireless methods, optical signal transfer methods (such as, for instance, fiber-optic methods and devices), and or other devices or methods suitable for establishing communication between the various sensors, devices, mechanisms, and controllers of the in-flight refueling system and alignment system of the present invention.

Referring again to FIG. **1** a method for facilitating an in-flight refueling operation between a first aircraft **110** adapted to carry an in-flight refueling boom **114** having an extendable nozzle **116** being capable of extending therefrom and a second aircraft **120** carrying a refueling receptacle **126** is described. Some embodiments of the method of the present invention comprise determining that an extendable nozzle **116** configured to extend from the in-flight refueling boom **114,** is substantially in alignment with the refueling receptacle **126;** and indicating that the in-flight refueling boom **114** is substantially in alignment with the refueling receptacle **126** (to, for instance, a controller **111** operably engaged with the in-flight refueling boom **114**) such that the subsequent extension of the extendable nozzle **116** will engage the refueling receptacle **126.** Other method embodiments may further comprise positioning the in-flight refueling boom **114,** using the controller **111,** such that the in-flight refueling boom **114** is substantially in alignment with the refueling receptacle **126.**

Referring to FIGS. **4** and **5****,** other method embodiments of the present invention may further comprise capturing an image **510** of the refueling receptacle **126** (using, for instance, an imaging device **410,** wherein the imaging device **410** may be disposed on an end of the in-flight refueling boom **114** as described above and shown generally in FIG. **4****);** and positioning of the in-flight refueling boom **114** substantially into alignment with the refueling receptacle **126** at least partially based on the image **510** captured by the imaging device. In yet another advantageous embodiment, the method of the present invention may further comprise determining a distance between the in-flight refueling boom **114** and the refueling receptacle **126** (using, for instance, a range-finder device **412**); and expending of the extendable nozzle **116** to engage the refueling receptacle **126** based at least partially on the distance determined between the in-flight refueling boom **114** and the refueling receptacle **126**.

Referring again to FIGS. **2-3****,** the indicating step of the method of the present invention may, comprise emitting a signal (from, for instance, a locator device **310a, 310b**, wherein the locator device or devices may be disposed substantially adjacent to the refueling aperture **124** as shown in FIG. **3**) carried by the second aircraft **120**; and receiving the signal at the first aircraft **110** (using a receiver device **210a, 210b** disposed on, for instance, an end of the in fight refueling boom **114** as shown generally in FIGS. **1-2**), wherein the reception of the signal by the receiver device **210a**, **210b** is indicative of substantial alignment between the in flight refueling boom **114** and the refueling receptacle **126**.

Many modification and other embodiments of the invention will come to mib to one skilled in the art to which this invention pertains having the benefit of the teachings presented in the foregoing descriptions and the associated drawings. Therefore, it is to be understood that the invention is not to be limited to the specific embodiments disclosed and that modification and other embodiment are intended to be included within the scope of the appended claims.

## Claims

1. An in-flight refueling system comprising:
an in-flight refueling boom (114) adapted to be carried by a first aircraft (110) and comprising an extendable nozzle (116) capable of extending therefrom, the extendable nozzle (116) being adapted to engage a refueling receptacle (126) carried by a second aircraft (120);
an alignment device (210) operably engaged with the in-flight refueling boom (114) and configured to determine and indicate alignment of the in-flight refueling boom (114) with the refueling receptacle (126) carried by the second aircraft (120) such that extension of the extendable nozzle (116) will engage the refueling receptacle; and a controller (111) operably engaged with the in-flight refueling boom (114) and in communication with the alignment device (210), the controller configured to position the in-flight refueling boom such that the in-flight refueling boom is in alignment with the refueling receptacle;
**characterized by** an imaging device (410) operably engaged with the in-flight refueling boom (114) and configured to be in communication with the controller, the imagine device being further configured to capture an image of the refueling receptacle and provide the image of the refueling receptacle to the controller (111);
the controller being further configured to be capable of receiving the image and positioning the in-flight refueling boom in response to the image, so as to align the in-flight refueling boom with the refueling receptacle;
a locator device (310) for being carried by the second aircraft and configured to emit a signal; and
the alignment device further comprising a receiver device (210a, b) configured to be capable of receiving the signal, reception of the signal by the receiver device being indicative of alignment between the in-flight refueling boom and the refueling receptacle.

2. An alignment system adapted to facilitate the engagement of an extendable nozzle (116) extending from an in-flight refueling boom (114) carried by a first aircraft (110) with a refueling receptacle (126) carried by a second aircraft (120), the alignment system comprising:
an alignment device (210) for being operably engaged with the in-flight refueling boom and configured to determine and indicate alignment of the in-flight refueling boom with the refueling receptacle carried by the second aircraft such that extension of the extendable nozzle will engage the refueling receptacle; and a controller (111) operably engaged with the in-flight refueling boom (114) and in communication with the alignment device (210), the controller configured to position the in-flight refueling boom such that the in-flight refueling boom is in alignment with the refueling receptacle;
**characterized by** an imaging device (410) operably engaged with the in-flight refueling boom (114) and configured to be in communication with the controller, the imaging device being further configured to capture an image of the refueling receptacle and provide the image of the refueling receptacle to the controller (111);
the controller being further configured to be capable of receiving the image and positioning the in-flight refueling boom in response to the image, so as to align the in-flight refueling boom with the refueling receptacle;
a locator device (310) for being carried by the second aircraft and configured to emit a signal; and
the alignment device further comprising a receiver device (210a, b) configured to be capable of receiving the signal, reception of the signal by the receiver device being indicative of alignment between the in-flight refueling boom and the refueling receptacle.

3. A system according to Claim 1 or 2, further comprising a range-finding device (412) operably engaged with the in-flight refueling boom and configured to be in communication with the controller, the range-finding device being further configured to determine a distance between the in-flight refueling boom and the refueling receptacle and provide the distance to the controller, the controller being further configured to be capable of receiving the distance and extending the extendable nozzle in response to the distance, so as to engage the refueling receptacle.

4. A system according to Claim 3, wherein the alignment device is responsive to the signal so as to direct the controller to extend the extendable nozzle to engage the refueling receptacle.

5. A system according to Claim 4, wherein the signal is selected from the group consisting of:
a magnetic field;
a laser beam;
a light beam;
an infra-red light beam; and
combinations thereof.

6. A method for facilitating an in-flight refueling operation between a first aircraft adapted to carry an in-flight refueling boom having an expendable nozzle being capable of extending therefrom and a second aircraft carrying a refueling receptacle, the method comprising:
positioning the in-flight refueling boom such that the in-flight refueling, boom is in alignment with the refuelling receptacle
determining that an extendable nozzle configured to extend from the in-flight refueling boom is in alignment with the refueling receptacle; and
indicating that the extendable nozzle is in alignment with the refueling receptacle such that the subsequent extension of the extendable nozzle will engage the refueling receptacle;
**characterized in that** the method further comprises
capturing an images of the refueling receptacle; and
positioning of the in-flight refueling boom into alignment with the refuelling receptacle at least partially based an the image;
emitting a signal from the second aircraft; and
receiving the signal at the first aircraft, wherein the reception of the signal by the receiver device is indicative of alignment between the in-flight refueling boom and the refueling receptacle.

7. The method according to Claim 6, further comprising extending the extendable nozzle to engage the refueling receptacle while the in-flight refueling boom is in alignment with the refueling receptacle.

8. The method according to Claim 7, further comprising:
determining a distance between the in-flight refueling boom and the refueling receptacle; and
extending the extendable nozzle to engage the refueling receptacle based at least partially on the distance between the in-flight refueling boom and the refueling receptacle.

## Patentansprüche

1. System zum Betanken während des Flugs mit:
einem Flugbetankungsausleger (114), der ausgelegt ist, von einem ersten Flugzeug (110) getragen zu werden und einen ausziehbaren Rüssel (116) aufweist, der sich von dem Ausleger erstrecken kann, wobei der ausziehbare Rüssel (116) ausgelegt ist, mit einem Betankungsbehälter (126) zusammenzuwirken, der von einem zweiten Flugzeug (120) getragen wird;
einer Ausrichtungsvorrichtung (201), die im Betrieb mit dem FlugbetankungsAusleger (114) zusammenwirkt und vorgesehen ist, um die Ausrichtung zwischen dem Flugbetankungsausleger (114) und dem Betankungsbehälter (126), der von dem zweiten Flugzeug (120) getragen wird, zu bestimmen und anzuzeigen, derart, dass die Verlängerung des ausziehbaren Rüssels (116) mit dem Betankungsbehälter zusammenwirken wird; und eine Steuerung (111), die im Betrieb mit dem Flugbetankungsausleger (114) zusammenwirkt und in Verbindung steht mit der Ausrichtungsvorrichtung (210), wobei die Steuerung konfiguriert ist, den Flugbetankungsausleger so zu positionieren, dass der Flugbetankungsausleger ausgerichtet ist zu dem Betankungsbehälter;
**gekennzeichnet durch** eine Abbildungsvorrichtung (410), die im Betrieb mit dem Flugbetankungsausleger (114) zusammenwirkt und konfiguriert ist, mit der Steuerung zu kommunizieren, wobei die Abbildungsvorrichtung ferner konfiguriert ist, ein Bild des Betankungsbehälters aufzunehmen und das Bild des Betankungsbehälters der Steuerung (111) zu liefern;
wobei die Steuerung ferner konfiguriert ist, das Bild empfangen zu können und den Flugbetankungsausleger in Antwort auf das Bild zu positionieren, so dass der Flugbetankungsausleger zu dem Betankungsbehälter ausgerichtet ist;
eine Positionsanzeigevorrichtung (310), die von dem zweiten Flugzeug getragen wird und konfiguriert ist, um ein Signal auszusenden; und
wobei die Ausrichtungsvorrichtung ferner eine Empfängervorrichtung (210a, b) aufweist, die konfiguriert ist, das Signal empfangen zu können, wobei der Empfang des Signals von der Empfängervorrichtung die Ausrichtung zwischen dem Flugbetankungsausleger und dem Betankungsbehälter anzeigt.

2. Ausrichtungssystem, das ausgelegt ist, den Eingriff eines ausziehbaren Rüssels (116), der sich von einem Flugbetankungsausleger (114) erstreckt und von einem ersten Flugzeug (110) getragen wird, zu einem Betankungsbehälter (126), der von einem zweiten Flugzeug (120) getragen wird, zu vereinfachen, wobei das Ausrichtungssystem aufweist:
eine Ausrichtungsvorrichtung (201), die im Betrieb mit dem FlugbetankungsAusleger (114) zusammenwirkt und vorgesehen ist, um die Ausrichtung zwischen dem Flugbetankungsausleger (114) und dem Betankungsbehälter (126),
der von dem zweiten Flugzeug (120) getragen wird, zu bestimmen und anzuzeigen, derart, dass die Verlängerung des ausziehbaren Rüssels (116) mit dem Betankungsbehälter zusammenwirken wird; und eine Steuerung (111), die im Betrieb mit dem Flugbetankungsausleger (114) zusammenwirkt und in Verbindung steht mit der Ausrichtungsvorrichtung (210), wobei die Steuerung konfiguriert ist, den Flugbetankungsausleger so zu positionieren, dass der Flugbetankungsausleger ausgerichtet ist zu dem Betankungsbehälter;
**gekennzeichnet durch** eine Abbildungsvorrichtung (410), die im Betrieb mit dem Flugbetankungsausleger (114) zusammenwirkt und konfiguriert ist, mit der Steuerung zu kommunizieren, wobei die Abbildungsvorrichtung ferner konfiguriert ist, ein Bild des Betankungsbehälters aufzunehmen und das Bild des Betankungsbehälters der Steuerung (111) zu liefern;
wobei die Steuerung ferner konfiguriert ist, das Bild empfangen zu können und den Flugbetankungsausleger in Antwort auf das Bild zu positionieren, so dass der Flugbetankungsausleger zu dem Betankungsbehälter ausgerichtet ist;
eine Positionsanzeigevorrichtung (310), die von dem zweiten Flugzeug getragen wird und konfiguriert ist, um ein Signal auszusenden; und
wobei die Ausrichtungsvorrichtung ferner eine Empfängervorrichtung (210a, b) aufweist, die konfiguriert ist, das Signal empfangen zu können, wobei der Empfang des Signals von der Empfängervorrichtung die Ausrichtung zwischen dem Flugbetankungsausleger und dem Betankungsbehälter anzeigt.

3. System nach Anspruch 1 oder 2, ferner mit einer Entfernungsbestimmungsvorrichtung (412), die im Betrieb mit dem Flugbetankungsausleger zusammenwirkt und konfiguriert ist, in Kommunikation mit der Steuerung zu stehen, wobei die Entfernungsbestimmungsvorrichtung ferner konfiguriert ist, einen Abstand zwischen dem Flugbetankungsausleger und dem Betankungsbehälter zu bestimmen und der Steuerung den Abstand zu liefern, wobei die Steuerung ferner konfiguriert ist, den Abstand zu empfangen und den ausziehbaren Rüssel in Antwort auf den Abstand zu verlängern, um mit dem Betankungsbehälter zusammenzuwirken.

4. System nach Anspruch 3, wobei die Ausrichtungsvorrichtung auf das Signal anspricht, um die Steuerung anzuweisen, den ausziehbaren Rüssel zu verlängern, um mit dem Betankungsbehälter zusammenzuwirken.

5. System nach Anspruch 4, wobei das Signal aus der Gruppe ausgewählt wird, die aufweist:
ein Magnetfeld;
einen Laserstrahl;
einen Lichtstrahl;
einen Infrarotlichtstrahl; und
eine Kombination davon.

6. Verfahren zur Vereinfachung eines Betankungsvorgangs während eines Flugs zwischen einem ersten Flugzeug, das ausgelegt ist, einen Flugbetankungsausleger mit einem ausziehbaren Rüssel zu tragen, der sich davon erstreckt, und einem zweiten Flugzeug, das einen Betankungsbehälter trägt, wobei das Verfahren aufweist:
Positionieren des Flugbetankungsauslegers derart, dass der Flugbetankungsausleger ausgerichtet ist zu dem Betankungsbehälter;
Bestimmen, dass ein ausziehbarer Rüssel, der konfiguriert ist, um sich von dem Flugbetankungsausleger zu erstrecken, ausgerichtet ist zu dem Betankungsbehälter; und
Anzeigen, dass der ausziehbare Rüssel ausgerichtet ist zu dem Betankungsbehälter, derart, dass die nachfolgende Verlängerung des ausziehbaren Rüssels zu einem Eingriff mit dem Betankungsbehälter führen wird;
**dadurch gekennzeichnet, dass** das Verfahren ferner aufweist:
Aufnahme eines Bilds des Betankungsbehälters; und
Positionieren des Flugbetankungsauslegers in Ausrichtung zu dem Betankungsbehälter zumindest teilweise basierend auf dem Bild;
Aussenden eines Signals von dem zweiten Flugzeug; und
Empfangen des Signals am ersten Flugzeug, wobei der Empfang des Signals durch die Empfängervorrichtung eine Ausrichtung zwischen dem Flugbetankungsausleger und dem Betankungsbehälter anzeigt.

7. Verfahren nach Anspruch 6, ferner mit: Verlängern des ausziehbaren Rüssels, um mit dem Betankungsbehälter zusammenzuwirken, während der Flugbetankungsausleger in Ausrichtung mit dem Betankungsbehälter gebracht wird.

8. Verfahren nach Anspruch 7, ferner mit:
Bestimmen eines Abstands zwischen dem Flugbetankungsausleger und dem Betankungsbehälter; und
Verlängern des ausziehbaren Rüssels, um mit dem Betankungsbehälter zusammenzuwirken basierend zumindest teilweise auf dem Abstand zwischen dem Flugbetankungsausleger und dem Betankungsbehälter.

## Revendications

1. Système de ravitaillement en vol comprenant :
une bôme de ravitaillement en vol (114) apte à être emportée par un premier aéronef (110) et comprenant une buse extensible (116) pouvant s'étendre à partir de celle-ci, la buse extensible (116) étant apte à s'engager dans un réceptacle de ravitaillement (126) emporté par un second aéronef (120) ;
un dispositif d'alignement (210) fonctionnellement mis en prise avec la bôme de ravitaillement en vol (114) et configuré pour déterminer et indiquer l'alignement de la bôme de ravitaillement en vol (114) avec le réceptacle de ravitaillement (126) emporté par le second aéronef (120) de façon à ce que, lors de son extension, la buse extensible (116) s'engage dans le réceptacle de ravitaillement; et une unité de commande (111) fonctionnellement mise en prise avec la bôme de ravitaillement en vol (114) et en communication avec le dispositif d'alignement (210), l'unité de commande étant configurée pour positionner la bôme de ravitaillement en vol de façon à ce que la bôme de ravitaillement en vol soit alignée avec le réceptacle de ravitaillement ;
**caractérisé par** un dispositif d'imagerie (410) fonctionnellement mis en prise avec la bôme de ravitaillement en vol (114) et configuré pour être en communication avec l'unité de commande, le dispositif d'imagerie étant en outre configuré pour acquérir une image du réceptacle de ravitaillement et fournir l'image du réceptacle de ravitaillement à l'unité de commande (111) ;
l'unité de commande étant en outre configurée pour pouvoir recevoir l'image et positionner la bôme de ravitaillement en vol en réponse à l'image afin d'aligner la bôme de ravitaillement en vol avec le réceptacle de ravitaillement ;
un dispositif de localisation (310) destiné à être emporté par le second aéronef et configuré pour émettre un signal ; et
le dispositif d'alignement comprenant en outre un dispositif récepteur (210a,b) configuré pour pouvoir recevoir le signal, la réception du signal par le dispositif récepteur étant représentative d'un alignement entre la bôme de ravitaillement en vol et le réceptacle de ravitaillement.

2. Système d'alignement apte à faciliter l'engagement d'une buse extensible (116) s'étendant à partir d'une bôme de ravitaillement en vol (114) emportée par un premier aéronef (110) dans un réceptacle de ravitaillement (126) emporté par un second aéronef (120), le système d'alignement comprenant :
un dispositif d'alignement (210) destiné à être fonctionnellement mis en prise avec la bôme de ravitaillement en vol et configuré pour déterminer et indiquer un alignement de la bôme de ravitaillement en vol avec le réceptacle de ravitaillement emporté par le second aéronef de façon à ce que, lors de son extension, la buse extensible s'engage dans le réceptacle de ravitaillement ; et une unité de commande (111) fonctionnellement mise en prise avec la bôme de ravitaillement en vol (114) et en communication avec le dispositif d'alignement (210), l'unité de commande étant configurée pour positionner la bôme de ravitaillement en vol de façon à ce que la bôme de ravitaillement en vol soit alignée avec le réceptacle de ravitaillement ;
**caractérisé par** un dispositif d'imagerie (410) fonctionnellement mis en prise avec la bôme de ravitaillement en vol (114) et configuré pour être en communication avec l'unité de commande, le dispositif d'imagerie étant en outre configuré pour acquérir une image du réceptacle de ravitaillement et fournir l'image du réceptacle de ravitaillement à l'unité de commande (111) ;
l'unité de commande étant en outre configurée pour pouvoir recevoir l'image et positionner la bôme de ravitaillement en vol en réponse à l'image afin d'aligner la bôme de ravitaillement en vol avec le réceptacle de ravitaillement ;
un dispositif de localisation (310) destiné à être emporté par le second aéronef et configuré pour émettre un signal ; et
le dispositif d'alignement comprenant en outre un dispositif récepteur (210a,b) configuré pour pouvoir recevoir le signal, la réception du signal par le dispositif récepteur étant représentative d'un alignement entre la bôme de ravitaillement en vol et le réceptacle de ravitaillement.

3. Système selon la revendication 1 ou 2, comprenant en outre un dispositif de télémétrie (412) fonctionnellement mis en prise avec la bôme de ravitaillement en vol et configuré pour être en communication avec l'unité de commande, le dispositif de télémétrie étant en outre configuré pour déterminer une distance entre la bôme de ravitaillement en vol et le réceptacle de ravitaillement et fournir la distance à l'unité de commande, l'unité de commande étant en outre configurée pour pouvoir recevoir la distance et provoquer l'extension de la buse extensible en réponse à la distance, afin qu'elle s'engage dans le réceptacle de ravitaillement.

4. Système selon la revendication 3, dans lequel le dispositif d'alignement est sensible au signal de façon à diriger l'unité de commande afin qu'elle provoque l'extension de la buse extensible pour qu'elle s'engage dans le réceptacle de ravitaillement.

5. Système selon la revendication 4, dans lequel le signal est sélectionné dans le groupe constitué :
d'un champ magnétique;
d'un faisceau laser ;
d'un faisceau lumineux ;
d'un faisceau de lumière infrarouge; et
de combinaisons de ceux-ci.

6. Procédé pour faciliter une opération de ravitaillement en vol entre un premier aéronef apte à emporter une bôme de ravitaillement en vol ayant une buse extensible pouvant s'étendre à partir de celle-ci et un second aéronef emportant un réceptacle de ravitaillement, le procédé consistant à :
positionner la bôme de ravitaillement en vol de façon à ce que la bôme de ravitaillement en vol soit alignée avec le réceptacle de ravitaillement ;
déterminer qu'une buse extensible configurée pour s'étendre à partir de la bôme de ravitaillement en vol est alignée avec le réceptacle de ravitaillement ; et
indiquer que la buse extensible est alignée avec le réceptacle de ravitaillement de façon à ce que, lors de son extension qui s'ensuit, la buse extensible s'engage dans le réceptacle de ravitaillement ;
**caractérisé en ce que** le procédé consiste en outre à :
acquérir une image du réceptacle de ravitaillement ; et
positionner la bôme de ravitaillement en vol en alignement avec le réceptacle de ravitaillement en se basant au moins partiellement sur l'imagé
émettre un signal depuis le second aéronef ; et
recevoir le signal dans le premier aéronef, la réception du signal par le dispositif récepteur étant représentative d'un alignement entre la bôme de ravitaillement en vol et le réceptacle de ravitaillement.

7. Procédé selon la revendication 6, consistant en outre à provoquer l'extension de la buse extensible afin qu'elle s'engage dans le réceptacle de ravitaillement pendant que la bôme de ravitaillement en vol est alignée avec le réceptacle de ravitaillement.

8. Procédé selon la revendication 7, consistant en outre à :
déterminer une distance entre la bôme de ravitaillement en vol et le réceptacle de ravitaillement ; et
provoquer l'extension de la buse extensible afin qu'elle s'engage dans le réceptacle de ravitaillement en se basant au moins partiellement sur la distance entre la bôme de ravitaillement en vol et le réceptacle de ravitaillement.
